# EUROPEAN PATENT APPLICATION

(11) **EP 3 086 242 A1**
(43) Date of publication of application: **26.10.2016**
(21) Application number: 16150265.3
(22) Date of filing: 05.01.2016
(51) Int. Cl.: G06F 17/30

(54) **A QUERY MEDIATOR, A METHOD OF QUERYING A POLYGLOT DATA TIER AND A COMPUTER PROGRAM EXECUTABLE TO CARRY OUT A METHOD OF QUERYING A POLYGLOT DATA TIER**

(30) Priority: 23.04.2015 GB 201506953
(71) Applicant: FUJITSU LIMITED, Kawasaki-shi Kanagawa 211-8588 (JP)
(72) Inventor: MENDAY, Roger, Guildford, Surrey GU1 1YB (GB); COSTABELLO, Luca, Galway (IE); UMBRICH, Jürgen, 1020 Vienna (AT); VANDENBUSSCHE, Pierre-Yves, Galway (IE); MUÑOZ JIMÉNEZ, Emir Fernando, Galway (IE); NOVÁCEK, Vit, Galway (IE)
(74) Representative: Wilding, Frances Ward

(57) **Abstract**

A query mediator arranged to query a polyglot data tier of data stores, each data store adopting a data model and the polyglot data tier including at least two different types of data store with differing data models, the software query mediator including at least one HTTP Application Programming Interface, API; a catalogue containing metadata for each data store; and a plurality of adapters, one for each data model, wherein the API is arranged to receive an incoming query from a client, to check the query against the catalogue to identify a correct data store storing the queried data, and to route the query to an adapter for the correct data store; the adapter is arranged to transform the query into a format suitable for use with the data model adopted in the correct data store, for execution by the relevant data store; the API is arranged to return the query result to the client in response to the incoming query.

## Description

The present invention relates to querying data which is held in data stores using different data models. These days there are a multitude of data models available for use. To name a few generic types of data models, there are key value stores, relational data stores, graph data stores, document-oriented data stores and column-based data stores. Some commercial databases use data models which have features of more than one of these types.

Key value stores use associative arrays, with a data structure commonly known as a dictionary, which contains objects or records, each with a number of different fields within them. There may be different fields for every record.

Relational databases store data in rows and columns. The rows and columns compose tables that need to be defined before storing the data. The definition of the tables and the relationship between data contained on these tables is called a schema. A relational database uses a fixed schema (or structure). A relational database management system (RDBMS) is a database management system (DBMS) that is based on the relational model. SQL, or Structured Query Language is a special-purpose programming language designed for manipulating data in a relational-model data store.

Graph databases represent a significant extension over relational databases by storing data in the form of nodes and arcs, where a node represents an entity or instance, and an arc represents a relationship of some type between any two nodes. In an undirected graph, an arc from node A to node B is considered to be the same as an arc from node B to node A. In a directed graph, the two directions are treated as distinct arcs.

Graph databases can be used to maintain large "semantic networks" that can store large amounts of structured and unstructured data in various fields. A semantic network is used as a form of knowledge representation and is a directed graph consisting of nodes that represent concepts, and arcs that represent semantic relationships between the concepts.

There are several types of graph representations. Graph data may be stored in memory as multidimensional arrays, or as symbols linked to other symbols. Another form of graph representation is the use of "tuples," which are finite sequences or ordered lists of objects, each of a specified type, such as a Uniform Resource Identifier, URI. A tuple containing n objects is known as an "n-tuple," where n can be any non-negative integer greater than zero. A tuple of length 2 (a 2-tuple) is commonly called a pair, a 3 -tuple is called a triple, a four-tuple is called a quadruple, and so on.

Triples are one of the most commonly used tuples. Optionally, the triples may be Resource Description Framework (RDF) triples. The Resource Description Framework is a general method for conceptual description or modelling of information that is a standard for semantic networks. Standardising the modelling of information in a semantic network allows for interoperability between applications operating on a common semantic network. RDF maintains a vocabulary with unambiguous formal semantics, by providing the RDF Schema (RDFS) as a language for describing vocabularies in RDF.

An RDF graph/triples can be queried using the SPARQL Protocol and RDF Query Language (SPARQL). It was standardized by the RDF Data Access Working Group (DAWG) of the World Wide Web Consortium, and is considered a key semantic web technology.

Another data model is used in so-called document-based (or document-oriented) data stores, which are semi-structured (there is no separation between the data and the schema) or schema-free. These may be classified as NoSQL (not only SQL) databases, which provide for storage and retrieval of data modeled other than in the tabular relational databases. For example, MongoDB is a document-oriented database which thus (like XML databases) relies on internal structure to extract metadata. It is classified as a noSQL database, with a format known as BSON (or Binary JSON), similar to JSON (JavaScript Object Notation): it can be queried using a Mongo API (Application Programming Interface). Incidentally, noSQL can be used with many different data models, including column, document, key value and graph data models.

A further model is the partitioned store used in Apache Cassandra and queried by the Cassandra Query Language, CQL. Cassandra is a hybrid between a key-value and a tabular database, and is sometimes viewed as a column-based store.

Consumer and corporate-oriented services are progressively drifting away from pure relational back ends, in favour of polyglot data tiers (also known as polyglot persistence). A polyglot data tier is a set of (autonomous) data stores that adopt these different data models, e.g. relational, document-based, graph-based, etc.

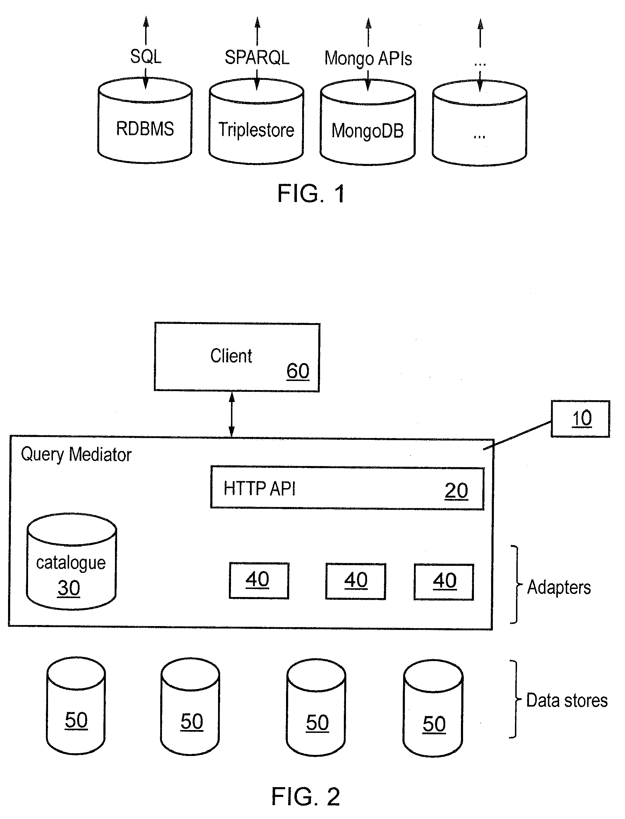

Figure 1 is a schematic diagram of a polyglot data tier, showing four data stores (repositories of information, which may be databases, but include simpler store types, such as flat files). The diagram shows a RDMS datastore, which can be accessed using SQL; a triple store, which can be accessed using SPARQL, a MONGODB datastore, which can be accessed using Mongo APIs; and on other. As an aside, the term "query" and "access" are used as equivalents herein, to refer in general to communication to a datastore.

Polyglot data stores can be hosted locally or distributed on the Web. Polyglot persistence simplifies data modelling, since different models can be natively hosted in the same backend without model re-engineering. For the same reason, integration of legacy data is made easier, as existing databases can be added to polyglot data tiers with no need to convert their data models. Polyglot persistence reduces response time (data is natively stored in databases optimized for specific data models), without adding constraints on data modelling. This is particularly convenient in Linked Data scenarios, (computer-readable web information which is interlinked using technologies such as HTTP (hyper text transfer protocol), RDF and URI's (Unique Resource Identifiers) where triplestores can be used in conjunction with leaner data stores (e.g. key-value NoSQL databases), thus obtaining the benefits of graph-based representation, and low latency queries on frequent accessed entries.

In one example of a practical application, a data tier must store information about a number of companies, their products, and the social network of their customers. Company profiles comes from legacy relational databases. Product descriptions vary considerably, and are frequently updated. Moreover, customer relationships and purchases need to be analysed. Polyglot persistence allows storage of company profiles in a relational database, to streamline legacy data import. Schema-less product information are stored in a schema-free data store such as MongoDB, so there is no need for schema migration. The customer social network is stored in a triplestore - to benefit from optimized embedded graph algorithms.

The benefits of polyglot data tiers come at a cost: Firstly, client application developers that interact with polyglot data tiers must be acquainted with a large number of data models (e.g. relational, triplestore, document-based), thus requiring familiarity with a growing set of query languages and interfaces (e.g. SQL for relational databases, SPARQL for triplestores, CQL for column-based data stores). Multiple query languages also mean relying on multiple client libraries, thus increasing code complexity and maintenance effort. Secondly, unforeseen data stores might be added to the polyglot data tier, hence an extensible approach may be required.

For example, interacting with the companies-products-customers polyglot data tier described in the example above means being acquainted with SQL and the relational model (to query company data), MongoDB APIs and JSON (to query product data), and SPARQL and RDF (to analyse customer relations). Besides, the polyglot data tier might be further extended with other data stores (e.g. MongoDB might be replaced by competing schema-less databases such as SimpleDB or CouchDB). It is thus desirable to provide a way of interacting with a set of datastores adopting different data models which limits the number of query languages with which a developer must be familiar and which allows an extensible approach.

According to an embodiment of one aspect of the present invention there is provided a query mediator arranged to query a polyglot data tier of data stores, each data store adopting a data model and the polyglot data tier including at least two different types of data store with differing data models, the software query mediator including at least one HTTP Application Programming Interface, API; a catalogue containing metadata for each data store; and a plurality of adapters, one for each data model, wherein the API is arranged to receive an incoming query from a client, to check the query against the catalogue to identify a correct data store storing the queried data, and to route the query to an adapter for the correct data store; the adapter is arranged to transform the query into a format suitable for use with the data model adopted in the correct data store, for execution by the relevant data store; and the API is arranged to return the query result to the client in response to the incoming query.

Invention embodiments introduce a query mediator for accessing polyglot data tiers. The query mediator may be a proxy (or proxy server) that offers a unified HTTP-based interface for querying polyglot data tiers by remote or local clients. Thus, application developers are released from dealing with database-specific data models, query languages, and interfaces. The embodiments do not introduce ad-hoc query languages (but use HTTP and preferably RESTful APIs), and the use of the catalogue and the adapters means that they are not limited to specific categories of data stores, thus also supporting SPARQL and triplestores.

A number of related art products provide unified interfaces for querying polyglot data tiers, but they all fall short of solving particular technical problems.

More specifically they either introduce ad-hoc query languages (that must be learnt from scratch by client application developers); and/or they are not designed for extensions. Many limit to specific data stores categories (e.g. NoSQL databases). Also they are not compatible with Linked Data scenarios, since none supports triplestores nor SPARQL.

In contrast, embodiments of the present invention use APIs which have (well known and predefined) HTTP operations and are suitable for web and semantic applications including linked data scenarios and triple stores.

Preferably, the API is a REpresentational-State-Transfer constrained, RESTful API. REST is a coordinated set of constraints applied to the design of components in a distributed hyper-medium system which is intended to lead to a better formed and easily maintained architecture. The REST architectural style was developed by the W3C Technical Architecture Group (TAG). REST has been proposed and described by Roy Fielding in his PhD dissertation: "Fielding, Roy Thomas. Architectural Styles and the Design of Network-based Software Architectures. Doctoral dissertation, University of California, Irvine, 2000."

To be RESTful according to the terms of the present invention, a web service API must be stateless, resource-oriented, and based on a uniform interface. Besides, REST APIs provide in-band knowledge on how to interact with resources, according to their current state. The present invention uses HTTP to offer REST-compliant APIs.

The query mediator may return a query result to the client in any appropriate form. Preferably, the API is arranged to include a query result into an intermediate data model made by the API during runtime. Hence, the query result and intermediate data model are constructed on the fly. The term "intermediate" used herein is intended to convey the meaning that this is the data model used by the interface and that the data store and client may have different models.

The intermediate data model can be in any appropriate format, preferably in the simple CSV format.

There may be more than one query result. For example there may be a sequence of queries or one query could request several items of information. In either case, the results may be serialized into a CSV format in a record joined together at runtime.

The API needs to be an interface allowing basic functions, for example the four basic functions of persistent storage, which are Create, Read, Update and Delete (CRUD). For this, the API can receive HTTP operations of GET, POST, PUT and DELETE. For full functionality of all the adapters, each one is arranged to transform all of these basic operations into queries suitable for the adapter's database model.

In some advantageous embodiments, the API can identify which is the correct data store for an incoming query whether or not the query specifies a data store. In order to do this, the API is arranged to parse the incoming query. If there is a data store specified in the query, the API is arranged to check the catalogue for existence of the specified data store. If there is no data store specified, the API is arranged to check the catalogue to find out which data store includes data requested in the query.

In some embodiments, the query mediator uses SPARQL for communication. Hence the API communicates with the catalogue using SPARQL. The catalogue also interacts with other query mediator components via SPARQL.

Preferably, the catalogue is a triple store containing RDF data.

The datastore metadata in the catalogue may be modeled using a data tier vocabulary. This vocabulary can contain the descriptions of data stores included in the polyglot tier, which are then used by the query mediator to route incoming queries to the correct data store. The data tier vocabulary may include classes and properties. The properties can be used to model database-specific properties, including database-specific properties of all the data sources used and database-connection properties

Preferably the data tier vocabulary is extensible, and this may be achieved, for example by the use of a structure with the classes and properties mentioned above. An extensible data tier vocabulary allows inclusion of new data stores.

As one example of the structure, the catalogue may include a datastore class and specific data stores may be defined as subclasses of datastore.

The query mediator may include at least two adapters and the number of adapters may be extensible. Hence, the adapter list may be supplemented during run time. As a minimum, an adapter for a triple model data store may be provided. This may be in addition to another adapter such as an adapter for a document-oriented model store and/or an adapter for a relational model data store, but there is no limitation to specific types of adapters such as document-oriented and relational model adapters. The triple stores and SPARQL can be natively supported (Built-in), since a SPARQL adapter can be included in a default adapter list.

Preferably, the data stores are autonomous of each other and/or the adapters are autonomous of each other. This allows easy addition of new data stores and adapters as necessary.

Preferably, when a new data store requiring a new adapter is added, adapter transform operations are implemented in a new adapter associated with the new data store and the catalogue is supplemented to include metadata for the new data store, which metadata can be used to identify the new data store as the correct data store when a query for the new data store is received. The data store is then run.

On the other hand, when a new data store not requiring a new adapter is added, the new data store may be associated with an adapter and the catalogue is supplemented to include metadata for the new data store, which metadata can be used to identify the new data store as the correct data store when a query for the new data store is received.

According to an embodiment of a further aspect there is provided a method of querying a polyglot data tier of data stores, each data store adopting a data model and the polyglot data tier including at least two different types of data with differing data models, the method including receiving an incoming hypertext transfer protocol, HTTP query from a client; checking the query against a catalogue containing metadata for each data store to identify a correct data store for the queried data; transforming the query into a format suitable for use with the data model adopted in the correct data store, for execution by the correct data store; sending the query in the suitable format to the correct data store; and returning the query result to the client in response to the incoming query.

According to an embodiment of a still further aspect there is provided a computer program, which when executed carries out a method of querying a polyglot data tier of data stores, each data store adopting a data model and the polyglot data tier including at least two different types of data store with differing data models, the method including receiving an incoming hypertext transfer protocol, HTTP query from a client; checking the query against a catalogue containing metadata for each data store to identify a correct data store for the query data; transforming the query into a format suitable for use with the data model adopted in the correct data store, for execution by the correct data store; sending the query in the suitable format to the correct data store; and returning the query result to the client in response to the incoming query.

A method or computer program according to preferred embodiments of the present invention can comprise any combination of the previous apparatus aspects. Methods according to these further embodiments can be described as computer-implemented in that they require processing and memory capability.

The apparatus according to preferred embodiments is described as configured or arranged to carry out certain functions. This configuration or arrangement could be by use of hardware or middleware or any other suitable system. In preferred embodiments, the configuration or arrangement is by software.

Thus according to one aspect there is provided a program which, when loaded onto at least one hardware module, configures the at least one hardware module to become the query mediator according to any of the preceding apparatus definitions or any combination thereof.

According to a further aspect there is provided a program which when loaded onto the at least one hardware module configures the at least one hardware module to carry out the method steps according to any of the preceding method definitions or any combination thereof.

The invention can be implemented in digital electronic circuitry, or in computer hardware, firmware, software, or in combinations of them. The invention can be implemented as a computer program or computer program product, i.e., a computer program tangibly embodied in an information carrier, e.g., in a machine-readable storage device or in a propagated signal, for execution by, or to control the operation of, one or more hardware modules. A computer program can be in the form of a stand-alone program, a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites and interconnected by a communication network.

Method steps of the invention can be performed by one or more programmable processors executing a computer program to perform functions of the invention by operating on input data and generating output. Apparatus of the invention can be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

Test scripts and script objects can be created in a variety of computer languages. Representing test scripts and script objects in a platform independent language, e.g., Extensible Markup Language (XML) allows one to provide test scripts that can be used on different types of computer platforms.

The invention is described in terms of particular embodiments. Other embodiments are within the scope of the following claims. For example, the steps of the invention can be performed in a different order and still achieve desirable results. Multiple test script versions can be edited and invoked as a unit without using object-oriented programming technology; for example, the elements of a script object can be organized in a structured database or a file system, and the operations described as being performed by the script object can be performed by a test control program.

Elements of the invention have been described using the terms "adapter" and "catalogue" and "API". The skilled person will appreciate that such terms and their equivalents may refer to parts of a apparatus that are spatially separate but combine to serve the function defined. Equally, the same physical parts of an apparatus may provide two or more of the functions defined.

For example, separately defined means may be implemented using the same memory and/or processor as appropriate.

Non-limiting embodiments of the invention will now be described with reference to the attached figures, in which:
Figure 1 (described above) is a schematic diagram of a polyglot data tier;
Figure 2 is a schematic diagram of the components of a general invention embodiment;
Figure 3 is a flow diagram of the method of a general method embodiment;
Figure 4 is a schematic diagram of the components of a specific invention embodiment;
Figure 5 is a flow diagram giving an overview of processes used in invention embodiments;
Figure 6 is a structural representation of data tier vocabulary according to one example;
Figure 7 is a flow diagram of the processes used in adding an adapter to a query mediator; and
Figure 8 is a flow diagram of the process of query mediation;
Figure 9 is a hardware diagram of a possible hardware arrangement.

Figure 2 shows query mediator 10, and its basic components, which are a RESTful/HTTP API 20, catalogue 30 and adapters 40. Preferably, the API satisfies all REST requirements, but at least it complies with the semantics of HTTP verbs.

The query mediator 10 receives queries/instructions from a client 60, which is depicted as a remote client and passes the queries (in transformed format as necessary) to data stores 50, which are also depicted as remote

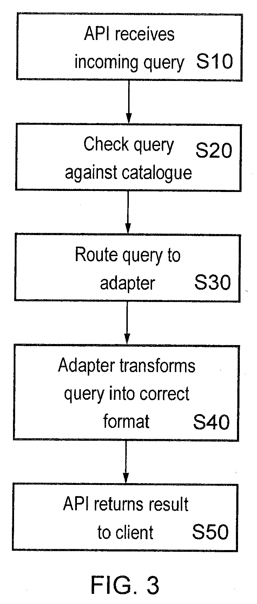

Briefly, and as shown in Figure 3, the API receives the query S10, uses metadata in the catalogue to check for the correct data store S20 and then the incoming query is forwarded S30 to the adapter associated with the data store, for transformation into a format compatible with the data store S40. The result provided by the data store is returned by the API to the client S50.

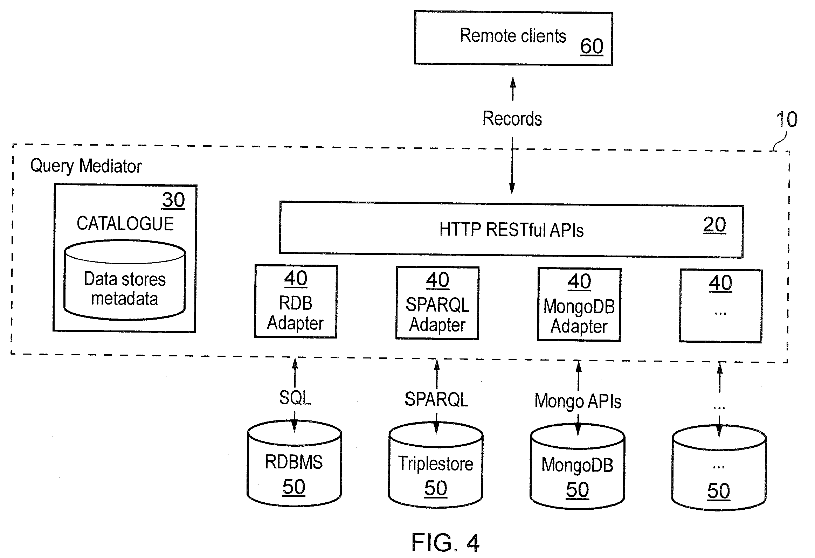

Figure 4 shows system components in a specific and more detailed example. Again, the query mediator 10 includes three components: the API layer 20, the catalogue 30, and the specific data store adapters, which are an RDB adapter, a SPARQL adapter, a MongoDB adapter, and one or more further adapters. These are linked (for example across the internet or another network) respectively to an RDBMS using SQL, a triplestore using SPARQL, a MongoDB using one or more Mongo APIs and one or more other data stores using the appropriate language(s). Of course, a single adapter can link to more than one data store, if the data stores have the same data model and thus can be queried using the same language/query format. The catalogue is depicted as holding data stores metadata, and the RESTful APIs communicate records to remote clients.

The query mediator is not a schema matcher or an instance matcher (both of which are used in identifying semantic links between objects). Rather, it is a component providing an automatic, unified interface between client queries and a variety of data stores which must be queried in different languages. Access control functionalities and record validation are out of the scope of this document.

The HTTP RESTful API layer 20 is the "frontend" component in charge of processing incoming requests and building responses.

The Catalogue 30 is a repository for data stores metadata. It is implemented as a triplestore.

The adapters 40 are the modules in charge of converting incoming client requests to database-specific operations.

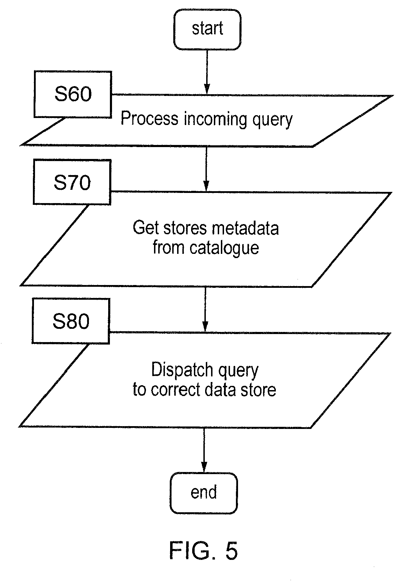

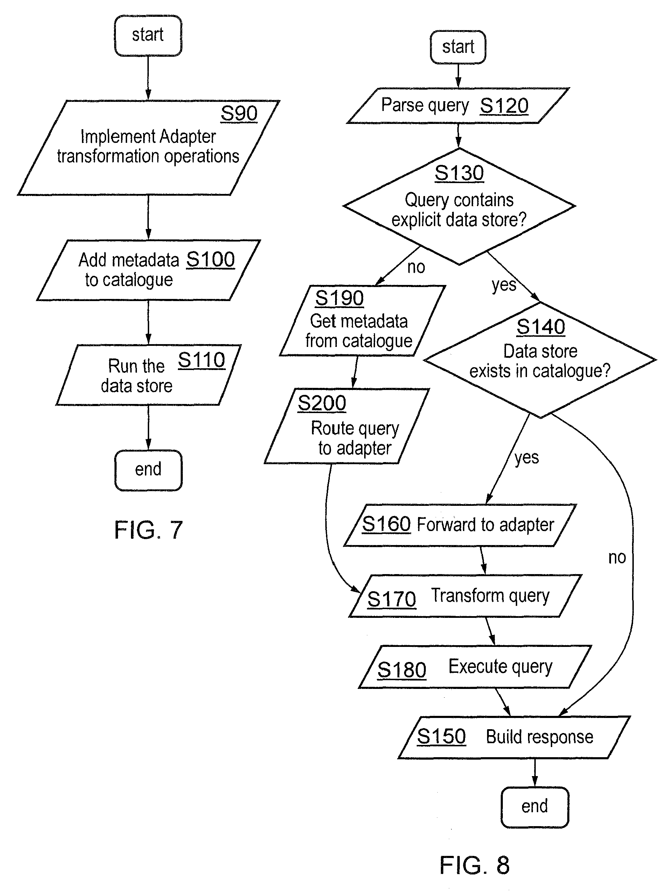

The aforementioned components process incoming queries as described in Figure 5 (an in-depth query processing flow-chart description is provided in Figure 8). In Figure 5, an incoming query is processed in S60, stores metadata is retrieved from the catalogue in S70 and the query is dispatched to the correct data store in S80.

### HTTP RESTful APIs

The query mediator offers RESTful HTTP APIs to interact with data sources in the polyglot data tier. Relying on HTTP APIs avoids the need to define yet another query language or ad-hoc interface. The API layer offers key-driven CRUD (create, read, update, delete) operations, along with scan queries capabilities. The following operations can be supported:
- *Read (key-based)*: using HTTP GET.
- *Read (scan)*: using HTTP GET.
- *Insert*: using HTTP POST.
- *Update:* using HTTP PUT.
- *Delete*: HTTP DELETE.

Hence both key-based and scan reading are supported. The query mediator adopts a CSV-like intermediate data model. The data model is based on the concept of a record. A record consists of a n-element tuple as shown below in CSV format:
value1, value2, value3, ..., valueN

The query mediator converts data stored in the polyglot tier into records at runtime, thus performing on-the-fly serialization and deserialization.

In the companies-product-customer practical application mentioned above, companies profile are serialized from relational tables to the following record:
*company-1, "ACME inc.", http:*//*acme*-*inc*.*com*, *"Bonn", "Germany", 1990*

### Catalogue

The catalogue is the repository of data store metadata. It contains the descriptions of data stores included in the polyglot tier: such descriptions are used by the query mediator to route incoming queries to the correct data store. The catalogue is a triplestore that interacts with the other query mediator components via SPARQL queries.

Data store metadata are modelled in RDF, according to the *Data Tier Vocabulary.* The Data Tier Vocabulary includes classes and properties to model database-specific properties, and is extensible to enable the inclusion of additional data stores in the polyglot tier.

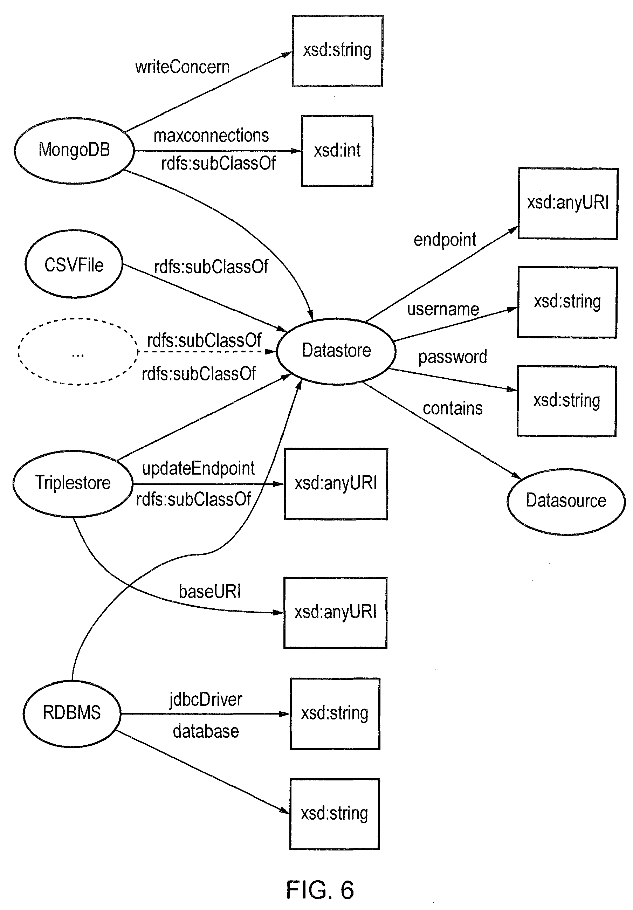

Figure 6 shows the main classes and properties of the vocabulary:
The DataStore class represents an instance of a Datastore included into the polyglot data tier. Each DataStore has an endpoint and access credentials (username and password). Besides, data stores contain Datasources. All these properties are shown to the right of Figure 6, with their XMD (XML Schema Definition) description.

A Datasource is a collection of tuples, whose instantiation varies according to the data model (e.g. relational tables for relational databases, graphs for triplestores, documents for MongoDB, etc...).

Specific data stores shown on the left of Figure 6 have been defined as subclasses of DataStore (using the rdfs:subClassOf statement):
MongoDB: models an instance of a MongoDB database. It includes the MongoDB write concern level and the maximum number of simultaneous connections that MongoDB will accept as properties, again defined using XSD descriptions.

CSVFile: models an instance of a CSV file.

Triplestore: models an instance of a triple store Datastore (SPARQL endpoint). The vocabulary supports the definition of a SPARQL 1.1 update endpoint URI, along with a base URI.

RDBMS: models an instance of a relational database manager (potentially SQL, JDBC (Java Database connectivity) -based. The instance is associated to a database and a JDBC driver.

| MongoDB | RDBMS | Triplestore |
|---|---|---|
| <mongodb> a Datastore, :MongoDB; | <mysql> a :Datastore, :RDBMS; | <fuseki> a :Datastore, :Triplestore; |
| rdfs:comment "Products descriptions"; | rdfs:comment "Companies profile"; | rdfs:comment "Customers social network"; |
| :endpoint <mongodb://localhost:27017>; | :username "usr"; | :endpoint <http://localhost:81/query>; |
| :database "products"; | :password "pwd"; | :updateEndpoint <http://localhost:81/up>; |
| :writeConcern "safe"; | :endpoint <mysql://localhost/>; | :baseURI <hftp://example/data/>; |
| :maxconnections 10; | :jdbcDriver "com.mysql.jdbc. Driver"; | :username "usr"; |
| :contains <products>. | :database "companies"; | :password "pwd"; |
| | :contains <companies>. | :contains <customers>. |

Table 1, set out below, shows sample data store metadata which are held in the catalogue for each of the MongoDB, RDMS and triplestore.

### - Table 1: Sample data store metadata stored in the catalogue (prefixes omitted).

### Adapters

Adapters transform incoming queries to database-specific operations. Transformations are model-dependent, thus the query mediator requires multiple adapters, one for each type of data store in the polyglot data tier (e.g. one for relational database managers, one for triplestores, one for MongoDB instances, etc.).

### Transformations

Adapters work in conjunction with the query mediator API layer, and they must therefore adhere to CRUD-like operations (create, read, update, delete). Hence, adapters implement the following set of operations:
- *Read (key-based)*: retrieve a single item. Items are identified by a unique key.
- *Read (scan)*: retrieve a set of items.
- *Insert*: single item insertion. Items are identified by a unique key.
- *Update*: single item update. Items are identified by a unique key.
- *Delete*: single item deletion. Items are identified by a unique key.

Table 2 shows the mappings used to transform queries for MongoDB, triplestores, and Relational databases (RDBMS):

**Table 2: Operation-specific transformations**

| | MongoDB | Triplestores | | RDBMS |
|---|---|---|---|---|
| Read | db. collection. findOne ( | SELECT ?s [...] | | SELECT * FROM [...] WHERE [...] |
| (key-based) | ) | FROM | | |
| | | WHERE{GRAPH [...] | | |
| | | {[...]} | | |
| | | VALUES ?s {key}} | | |
| | | | | |
| Read (scan) | db.collection.find() | SELECT ?s[...] | SELECT * FROM [...] | |
| | | FROM | WHERE [...] | |
| | | WHERE{GRA | LIMIT [...] OFFSET [...] | |
| | | PH [...] | | |
| | | {[...]}} | | |
| | | ORDER BY ?s | | |
| | | | | |
| Insert | db.collection.insert() | INSERT DATA | INSERT INTO [...] ([...]) | |
| | | GRAPH [...]{ | VALUES ([...]) | |
| | | [...] | | |
| | | }} | | |
| | | | | |
| Update | db.collection.update() | WITH [...] | UPDATE [...] | |
| | | DELETE [...] | SET[...] | |
| | | WHERE[...] | WHERE [...] | |
| | | | | |
| Delete | db.collection.remove() | WITH [...] | DELETE FROM [...] WHERE [...] | |
| | | DELETE [...] | | |
| | | INSERT[...] | | |
| | | WHERE[...] | | |

As an example, in the companies-product-customer practical application, a key based read operation i) on companies profile stored in the MySQL instance is transformed by the RDBMS adapter into SQL query ii):
i) GET http://.../mysql/companies/1
   SELECT *
ii) FROM companies
   WHERE id = '1'

### Adding adapters.

The adapter list is extensible to third parties, thus supporting any data store, as long as the proper metadata is added to the catalogue (using the Data Tier Vocabulary) and all the operations listed above are associated to a transformation. Note that new data stores can be added to the polyglot tier at runtime, as long as a proper adapter is present.

The process of adding a new adapter to the polyglot data tier is summarized in Figure 7.

The new adapter instance must implement the transformations of the Read (key-based and scan), Insert, Update, and Delete operations (S90). The data store metadata must be added to the catalogue (S100). The data store must be up and running on the host machine (S110).

Figure 8 shows the process of query mediation, in which the query mediator processes incoming queries.

Firstly, the HTTP APIs frontend parses the client query (S120) and checks if it contains an indication of a data store (S130).

If the query contains an explicit data store id, there is a further check if the data store exists in the catalogue (S140):
- If the data store does not exist, a response is generated as a "not found" response (S150).
- If the data store exists in the catalogue, the query is forwarded to the associated adapter (S160). The association between data stores and adapters is made possible by the metadata stored in the catalogue. As shown in Table 1, each data store belongs to a given class (line 1 of each column), according to the Data Tier vocabulary described in Figure 6 (e.g. MongoDB, triplestore, RDBMS). The query mediator uses such association to forward queries to the correct adapter.

- The adapter transforms the query into data-store-specific APIs or query language (S170).
- The transformed query is executed on the data store (S180).
- Results are serialized into the record-based intermediate data model and sent back to the client by the HTTP API layer (S150).

-If the query does not include a data store id:
- The catalogue is queried to get the data store where the desired resource(s) is located (S190).
- The incoming query is transparently routed to the associated data store adapter (S200). Routing is determined by data store metadata saved in the catalogue.
- The adapter transforms the query into data-store-specific APIs or query language (S170).
- The transformed query is executed on the data store (S180).
- Results are serialized into the record-based intermediate data model and sent back to the client by the HTTP API layer (S150).

Providing the data store identifier is therefore optional: clients do not need to know which data store holds the requested resource, since catalogue metadata associates data sources to data stores.

In the companies-product-customer practical application, company profiles are stored in a MySQL instance. Clients can retrieve company number 1 by explicitly adding the id of the data store in the request (i), or by relying on the query mediator routing mechanism (ii). Note that either data store ids (mysql) and data source ids (companies) must match the metadata contained in the catalogue (Table 1).
(i) GET http://.../mysql/companies/1
(ii) GET http://.../companies/1

The query mediator described in the above embodiments satisfies the technical problems. More specifically:
The query mediator relieves client application developers from the burden of dealing with multiple query languages and interfaces. This is achieved with the adoption of a (RESTful) HTTP-based API layer, and a query transformation mechanism. The APIs can support key-based access, scan capabilities, and write-mode operations, all without introducing an ad-hoc query language. The query transformation mechanism converts incoming HTTP queries into the correct data-store-specific query language,
and transparently routes queries to the correct adapter if this is not specified by clients.

The query mediator supports any kind of data store, regardless of the adopted data model and query language. This is the benefit of an architecture based on pluggable data store adapters. As the adapter list is extensible, new data stores can be added at runtime. Besides, data store metadata can be modelled with an RDFS/OWL ontology, and is thus extensible by design. Note that triplestores and SPARQL are natively supported, since a SPARQL adapter is included in the default adapter list.

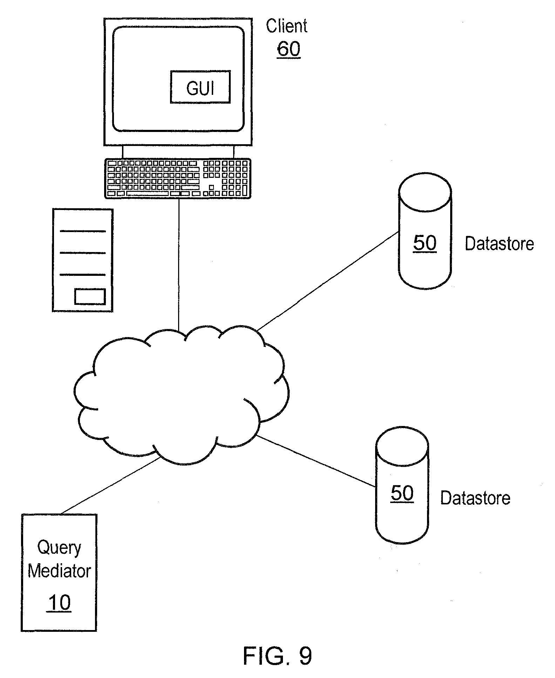

Figure 9 is a schematic diagram of suitable hardware. The remote client 60 may be an application or a remote user on a computer with networking capability, and communicates with the query mediator 10 (which may be provided as a server) over the internet. Data stores 50 are also connected to the query mediator via the internet.

## Claims

1. A query mediator arranged to query a polyglot data tier of data stores, each data store adopting a data model and the polyglot data tier including at least two different types of data store with differing data models, the software query mediator including:
at least one HTTP Application Programming Interface, API; a catalogue containing metadata for each data store; and a plurality of adapters, one for each data model, wherein
the API is arranged to receive an incoming query from a client, to check the query against the catalogue to identify a correct data store storing the queried data, and to route the query to an adapter for the correct data store;
the adapter is arranged to transform the query into a format suitable for use with the data model adopted in the correct data store, for execution by the relevant data store;
the API is arranged to return the query result to the client in response to the incoming query.

2. A query mediator according to claim 1, wherein the API is a REpresentational-State-Transfer constrained, RESTful API, which is preferably arranged to include a query result into an intermediate data model made by the API during runtime.

3. A query mediator according to claim 1 or 2, wherein the intermediate data model is in a comma separated values, CSV, format and preferably wherein there is more than one query result and the results are serialized into a CSV format in a record during runtime.

4. A query mediator according to any of the preceding claims, wherein the API is arranged to receive hypertext transfer protocol, HTTP operations of GET, POST, PUT and DELETE, and each adapter is arranged to transform all of these operations into queries suitable for the adapter's database model.

5. A query mediator according to any of the preceding claims, wherein the API is arranged to parse the incoming query and to check the catalogue for existence of a data store specified in the query, or if there is no data store specified, to check the catalogue to find which data store includes data requested in the query.

6. A query mediator according to any of the preceding claims, wherein the API communicates with the catalogue using in the SPARQL Protocol and RDF Query Language, SPARQL and/or wherein the catalogue is a triplestore, modelled in Resource Description Framework, RDF.

7. A query mediator according to any of the preceding claims, wherein the data store metadata in the catalogue are modelled using a data tier vocabulary which includes classes and properties used to model database-specific properties, among all the contained data sources and database-connection properties, and preferably wherein the data tier vocabulary is extensible, and enables inclusion of new data stores.

8. A query mediator according to any of the preceding claims, wherein the catalogue includes a datastore class and specific datastores defined as subclasses of datastore.

9. A query mediator according to any of the preceding claims, wherein there are at least two adapters and the number of adapters is extensible.

10. A query mediator according to any of the preceding claims, wherein the adapters include an adapter for a triple model data store, and an adapter for a document-oriented model store and/or an adapter for a relational model data store.

11. A query mediator according to any of the preceding claims, wherein the data stores are autonomous of each other and/or the adapters are autonomous of each other.

12. A query mediator according to any of the preceding claims, wherein when a new data store requiring a new adapter is added, adapter transform operations are implemented in a new adapter associated with the new data store and the catalogue is supplemented to include metadata for the new data store and/or wherein when a new data store not requiring a new adapter is added, the new data store is associated with an adapter and the catalogue is supplemented to include metadata for the new data store, which metadata can be used to identify the new data store as the correct data store when a query for the new data store is received.

13. A method of querying a polyglot data tier of data stores, each data store adopting a data model and the polyglot data tier including at least two different types of data with differing data models, the method including:
receiving an incoming hypertext transfer protocol, HTTP query from a client;
checking the query against a catalogue containing metadata for each data store to identify a correct data store for the queried data;
transforming the query into a format suitable for use with the data model adopted in the correct data store, for execution by the correct data store;
sending the query in the suitable format to the correct data store; and
returning the query result to the client in response to the incoming query.

14. A computer program, which when executed carries out a method of querying a polyglot data tier of data stores, each data store adopting a data model and the polyglot data tier including at least two different types of data store with differing data models, the method including:
receiving an incoming hypertext transfer protocol, HTTP query from a client;
checking the query against a catalogue containing metadata for each data store to identify a correct data store for the query data;
transforming the query into a format suitable for use with the data model adopted in the correct data store, for execution by the correct data store;
sending the query in the suitable format to the correct data store; and
returning the query result to the client in response to the incoming query.

15. A method according to claim 13 or a computer program according to claim 14, wherein the HTTP query is compliant with the REST paradigm adopted by one or more APIs receiving the HTTP queries.
